# EUROPEAN PATENT APPLICATION

(11) **EP 2 631 005 A1**
(43) Date of publication of application: **28.08.2013**
(21) Application number: 11833785.6
(22) Date of filing: 15.08.2011
(51) Int. Cl.: B01D 53/78, B01D 53/62

(54) **METHOD AND APPARATUS FOR CAPTURING CARBON DIOXIDE IN FLUE GAS WITH ACTIVATED SODIUM CARBONATE**

(30) Priority: 18.10.2010 CN 201010510906
(71) Applicant: Wuhan Kaidi Electric Power Co. Ltd., Wuhan, Hubei 430223 (CN)
(72) Inventor: WEI, Shifa, Wuhan Hubei 430223 (CN); HAN, Xu, Wuhan Hubei 430223 (CN); XUE, Yongjie, Wuhan Hubei 430223 (CN); WANG, Zhilong, Wuhan Hubei 430223 (CN); ZHANG, Yanfeng, Wuhan Hubei 430223 (CN)
(74) Representative: Zeuner, Stefan
(86) International application number: PCT/CN2011/078394
(87) International publication number: WO 2012/051879

(57) **Abstract**

Disclosed are a method and an apparatus for capturing carbon dioxide in flue gas with activated sodium carbonate. According to the method, an aqueous sodium carbonate solution added with an alcoholamine activator is used as a CO₂ absorbent, the alcoholamine is bonded to CO₂ first to generate an amphoteric intermediate, and then hydrated, so as to be released again for recycling, H+ generated in hydration is neutralized by a basic ion CO₃²⁻, HCO₃⁻ generated in hydration is bonded to the metal ion Na⁺ to form sodium bicarbonate which is deposited gradually, and finally a sodium bicarbonate slurry is obtained. Through decomposition, the sodium bicarbonate slurry is regenerated to obtain gas CO₂ and an aqueous sodium carbonate solution, and the gas CO₂ is processed into a liquid through conventional treatment. The apparatus mainly consists of an absorption column (1), inclined plate sedimentation tank (6), a regeneration column (10), a cooler (17), a gas-liquid separator (16), a drier (15), a compressor (14) and a condenser (13) that are connected via pipes.

## Description

### FIELD OF THE INVENTION

The invention relates to an emission reduction and resource utilization technology of carbon dioxide from flue gas of a power plant boiler, and more particularly to a method and an apparatus for capturing carbon dioxide from flue gas by using active sodium carbonate.

### BACKGROUND OF THE INVENTION

Greenhouse effect is one of the biggest environmental challenges facing humanity today. In all greenhouse gases, CO₂ has the highest content, long term existence, and the greatest contribution to the greenhouse effect. Thus, reduction of CO₂ emission is an inevitable requirement of sustainable development. According to statistics, by the end of 2007, China's CO₂ emission is 6.01 billion tons/year, which ranked the first in the world. 1623 sources of strong emission (the CO₂ emission of a single source is more than 1 million tons/year) emit 3.9 billion tons/year, which account for about 65% of a total CO₂ emission. A majority of the sources of strong emission are coal-fired power plants, and CO₂ from flue gas of coal-fired power plants are long term and stably concentrated emission recourses. Thus, to develop emission reduction and resource utilization technology of carbon dioxide in flue gas from a power plant boiler is very important for preventing the economic development from being affected by the carbon emission target.

Several methods for capturing CO₂ have been developed. A chemical absorption method is widely applied in industries, and principle of the chemical absorption method is as follows: CO₂ in the flue gas is prone to react with and be absorbed by a chemical solvent. A rich solution of the chemical solvent is acquired after absorbing CO₂ to an equilibrium state; then the rich solution is introduced into a regeneration tower, heated and decomposed for releasing CO₂ gas and being transformed into a barren solution. After that, the barren solution is recycled to absorb CO₂ from the flue gas. Thus, by circulating an absorbent solution between an absorption tower and the regeneration tower, CO₂ in the flue gas is captured, separated, and purified. Currently, the chemical absorption method using an amino alcohol solution to absorb CO₂ is the most widely applied method, which specifically includes: an MEA method, an MDEA, and a mixed organic amines method. In productive practice, it has been proved that, although the chemical absorption method using the amino alcohol solution which has been applied for about twenty years in chemical field has the characteristics of fast absorption speed, strong absorption ability, it still has a common defect when it is utilized in treating flue gas from power plant that the oxidative degradation of the amino alcohol affects a long term and stable operation of the apparatus, thereby resulting a serious corrosion on the apparatus, and high energy consumption in regeneration. This is mainly because the flue gas of coal-fired power plant has the following characteristics, compared with that of the common chemical gas resource: 1) a large amount of the flue gas having a relatively low concentration of carbon oxide (10-15%); 2) the flue gas contains a relative high content of oxygen (5-10%), and dust including metal ion Fe and others, which accelerates the oxidative degradation of the organic amines, and results in a large consumption of the expensive amino alcohol absorbent. All these reasons account for the high cost of the method for capturing carbon dioxide by using amino alcohol.

Sodium carbonate is first used in industrialized manufacture of CO₂ absorbents, which absorbs CO₂ and produce NaHCO₃. A temperature for complete decomposition of NaHCO₃ into Na₂CO₃ and CO₂ is 20-30°C lower than a temperature of the regeneration of amino alcohol. Thus, for energy consumption of regeneration, the method by using sodium carbonate as the absorbent has an obvious advantage that it has 20-30% energy consumption lower than the method using amino alcohol as the absorbent. However, the alkalinity of sodium carbonate is weaker than that of amino alcohol, and has a low absorption speed, poor effect of absorption when sodium carbonate is used alone. Furthermore, a comprehensive energy consumption and cost of the method using sodium carbonate is not superior to the method using the organic amines, and the method using sodium carbonate has almost been abandoned.

Thus, it has been a problem for skills in that art to improve the method of sodium carbonate absorption for improving the ability of CO₂ absorption and decreasing the comprehensive energy consumption and cost. However, a lot of experiments have been made with unsatisfied effects, let alone put into commercial applications.

### SUMMARY OF THE INVENTION

In view of the above-described problems, it is one objective of the invention to provide a method and an apparatus for capturing carbon dioxide from flue gas by using active sodium carbonate that have a simple processing, simple structure of apparatus, low investment, and low production cost. The method and the apparatus completely adapt to the characteristics of the flue gas of the power plant boiler, solve problems of oxidative degradation of the organic amines, serious corrosion on the apparatus, and high energy consumption.

To achieve the above objective, in accordance with one embodiment of the invention, there is provided a method for capturing carbon dioxide from flue gas by using active sodium carbonate. The method is a reprocessing of the flue gas of power plant boilers after common dust removal and desulfurization treatment, and comprises the following steps:

1) mixing an aqueous solution of sodium carbonate with an amino alcohol activator to yield a CO₂ absorbent; evenly spraying the CO₂ absorbent into the flue gas after the common dust removal and desulfurization treatment for fully contacting the flue gas flowing upwardly with the downwardly sprayed CO₂ absorbent and for allowing CO₂ in the flue gas to react with the amino alcohol activator and the aqueous solution of sodium carbonate: the amino alcohol activator first contacting with CO₂ to form a zwitterionic intermediate and being free again in a consequent hydration reaction of the zwitterionic intermediate, H⁺ produced from the hydration reaction being neutralized by alkali ion CO₃²⁻ in the aqueous solution of sodium carbonate, and HCO₃⁻ produced from the hydration reaction contacting with metal ion Na⁺ in the aqueous solution of sodium carbonate and precipitating to produce a sodium bicarbonate slurry. Hereinbelow a reaction principle between the amino alcohol activator which is represented by capital letter A and the aqueous solution of sodium carbonate (Na₂CO₃) is explained:

First, the amino alcohol activator A contacts with CO₂ to form the zwitterionic intermediate A·CO₂, which is summarized by the following chemical equation:

CO₂+A→A·CO₂ (1-1)

Second, the hydration reaction of the zwitterionic intermediate A·CO₂, the amino alcohol activator A is free again; HCO₃⁻ and CO₃²⁻ are also produced, which is summarized by the following chemical equation:

A·CO₂+H₂O→HCO₃⁻+H⁺+A (1-2)

Third, H⁺ produced from the hydration reaction is neutralized by alkali ion CO₃²⁻in the aqueous solution of sodium carbonate, which is summarized by the following chemical equation:

CO₃²⁻+H⁺→HCO₃⁻ (1-3)

Fourth, HCO₃⁻ contacts with metal ion Na⁺ in the aqueous solution of sodium carbonate to precipitate gradually, which is summarized by the following chemical equation:

Na⁺+HCO₃⁻→NaHCO₃↓ (1-4)

Because the amino alcohol activator A is prone to combine with CO₂, the zwitterionic intermediate A·CO₂ is immediately produced in a reaction zone of the reaction (1-1). As the hydration reaction of the zwitterionic intermediate A·CO₂ is much faster than that of CO₂, the production speed of HCO₃⁻ and H⁺ is very fast. Therefore, the amino alcohol activator A is recycled in the reaction zone between a combined state and a free state, which assures the neutralization reaction (1-3) continuously occurs, and a whole CO₂ absorption speed of the method is much faster than the CO₂ absorption speed by using Na₂CO₃ alone. Furthermore, because NaHCO₃ has a relative small solubility in the CO₂ absorbent solution, NaHCO₃ crystallizes and precipitates with the increase of a production thereof, which decreases HCO₃⁻ in the absorbent solution, and further propels the whole reaction to a direction of CO₂ absorption. Thus, the whole CO₂ absorption effect of the method is relatively equal to a whole CO₂ absorption effect by using the amino alcohol alone, but the production cost of the method is largely decreased.

2) thermal decomposing the sodium bicarbonate slurry obtained in step 1) to produce a high concentrated CO₂ gas and an aqueous solution of sodium carbonate, which is summarized by the following chemical equation:

2NaHCO₃=Na₂CO₃+CO₂↑+H₂O

3) returning the aqueous solution of sodium carbonate obtained in step 2) to step 1) to form the CO₂ absorbent for recycling;

4) cooling the high concentrated CO₂ gas separated from step 2) for condensing hot water vapor therein;

5) carrying out gas-liquid separation on the high concentrated CO₂ gas after cooling treatment of step 4), removing condensed water to yield high purified CO₂ gas having a purity exceeding 99%; and

6) drying, compressing, and condensing the high purified CO₂ gas to transform the high purified CO₂ gas into a liquid state, and obtaining a high concentrated liquid CO₂.

A concentration of the aqueous solution of sodium carbonate is 10-30 wt. %. The amino alcohol activator is monoethanolamine (MEA) or diethanolamine (DEA). A weight of monoethanolamine or diethanolamine being added is 0.5-6% of a weight of sodium carbonate being added. A circulating liquid gas ratio between a whole solution of the CO₂ absorbent and the flue gas is 5-25 L/m³. Thus, appropriate proportion of the amino alcohol activator and concentration of the aqueous water solution assure a fast reaction with CO₂, decrease a dosage of the expensive absorbent to the utmost, prevent the corrosion of the apparatus caused by oxidative degradation of the amino alcohol, and largely decrease the investment on the apparatus and the operation cost.

A temperature of the reaction between CO₂ in the flue gas and the CO₂ absorbent in step 1) is controlled at 40-55°C; and a pressure of the reaction is controlled at 3-300 kPa. Thus, the absorbent solution is capable of completely reacting with CO₂ in the flue gas at a suitable temperature and pressure.

A temperature of the thermal decomposition of the sodium bicarbonate slurry in step 2) is controlled at 80-130°C. Within such a temperature range, sodium bicarbonate is quickly decomposed for releasing a large amount of CO₂ and acquiring the high concentrated CO₂ gas.

The high concentrated CO₂ gas is cooled to a temperature of 20-35°C. Thus, a large amount of water vapor is condensed, thereby improving the purity of the CO₂ gas.

An apparatus for capturing carbon dioxide from flue gas by using active sodium carbonate to carry out the above method, comprising: an absorption tower, a regeneration tower, a cooler, a gas-liquid separator, a desiccator, a compressor, and a condenser. A plurality of absorbent spray layers and at least one demister device are arranged one after another from bottom to top between a lower flue gas inlet and a top flue gas outlet of the absorption tower. A bottom slurry outlet of the absorption tower communicates with an upper slurry inlet of a slanting board sedimentation pool. An upper absorbent inlet of the slanting board sedimentation pool communicates with an absorbent container. A supernatant outlet of the slanting board sedimentation pool is connected to the absorbent spray layers of the absorption tower via an absorbent circulating pump. An underflow outlet of the slanting board sedimentation pool is connected to an upper feed inlet of the regeneration tower via a sodium bicarbonate pump. A lower feed outlet of the regeneration tower is connected to the upper absorbent inlet of the slanting board sedimentation pool via a sodium carbonate pump. An upper decomposed gas outlet of the regeneration tower is connected to an inlet of the gas-liquid separator via the cooler. A gas outlet of the gas-liquid separator is in series connected with the desiccator, the compressor, and the condenser. Thus, during the absorption of CO₂, treatments of CO₂ gas comprising regeneration, dehydration, desiccation, compression, and condensation are continuously carried out until a highly purified liquid carbon dioxide is acquired.

The underflow outlet of the slanting board sedimentation pool is connected to the upper feed inlet of the regeneration tower via the sodium bicarbonate pump and a heat exchanger. The lower feed outlet of the regeneration tower is connected to the upper absorbent inlet of the slanting board sedimentation pool via the sodium carbonate pump and the heat exchanger. Thus, an exhaust heat of a barren solution of sodium carbonate in the regeneration tower is fully utilized, that is, preheating a rich solution of sodium bicarbonate introduced into the regeneration tower, and meanwhile cooling down the barren solution of sodium carbonate; thereby realizing a benign recycling of the heat exchange and saving the heat energy resource.

A liquid outlet of the gas-liquid separator is connected to the upper absorbent inlet of the slanting board sedimentation pool. Therefore, the condensed water separated from the gas-liquid separator is returned to the slanting board sedimentation pool for water recycling, thereby reducing the water consumption in the whole process and lowering the production cost.

Three absorbent spray layers are employed. A filler layer is arranged beneath a highest absorbent spray layer. A uniform flow sieve plate is arranged beneath each of the other two absorbent spray layers. Furthermore, a ratio between an aperture area and a plate area of the uniform flow sieve plate is 30-40%. On one hand, through the uniform flow sieve plate, the upward gas flow becomes more uniform, which effectively eliminates a dead angle of the flue gas and is conducive to full contact between the flue gas and the absorbent; on the other hand, under the spraying action of absorbent through a plurality of absorbent spray layers, a spraying coverage of the absorbent on a cross section of the absorption tower is 300% above, thereby assuring a full contact between CO₂ in the flue gas and the absorbent and a complete chemical reaction for absorbing CO₂.

Compared with a conventional processing that employs an amino alcohol to remove carbon dioxide, advantages of the invention are summarized as follows:

First, the CO₂ absorbent is formed by adding the amino alcohol activator into the aqueous solution of sodium carbonate. The whole CO₂ absorption effect of the CO₂ absorbent is relatively equal to a whole CO₂ absorption effect by using the amino alcohol alone; however, difficulties of CO₂ absorption by using the amino alcohol alone, such as large consumption of the amino alcohol absorbent, difficulty in later treatment after degradation, and high operation cost, and so on, are solved. Besides, sodium carbonate is a widely used chemical product, which is very easy to purchase with a price being 1/10 of that of the amino alcohol; thereby largely decreasing the cost for capturing CO₂ gas.

Second, after CO₂ is absorbed by the aqueous solution of sodium carbonate, the produced sodium bicarbonate has a decomposing temperature that is 20-30°C lower than a regeneration temperature of the amino alcohol. Not only the energy consumption of the regeneration process is low, but also low exhaust heat of the flue gas and other heating means are effectively utilized, thereby being conducive to energy conservation. Thus, the invention is particularly applicable to treat flue gas from coal-fired power plant boiler that has a large flow of flue gas and a low concentration of carbon dioxide.

Third, the amino alcohol activator is only a small part in the aqueous solution of sodium carbonate, so that the problem of oxidative degradation of the amino alcohol activator is prevented. Besides, the corrosion phenomenon on the apparatus is far few than that when using the amino alcohol activator alone. Thus, the method of the invention can be stably operated; availability of the apparatus is much higher than that of the amino alcohol absorption method, and the apparatus investment and operation cost are much lower than that of the amino alcohol absorption method.

Finally, the method fully utilizes the flue gas from the power plant boiler; effectively decrease the emission of carbon dioxide while acquiring the liquid state carbon dioxide having the purity of 99% above, which meets the carbon dioxide standard of international industrial grade. The method is not only beneficial to the comprehensive management of atmospheric pollution, but also propels a benign development of recycling economy. Furthermore, the method realizes a harmless and resource utilization of the flue gas from the power plant boiler, which is very suitable for coal-fired power plants.

### BRIEF DESCRIPTION OF THE DRAWINGS

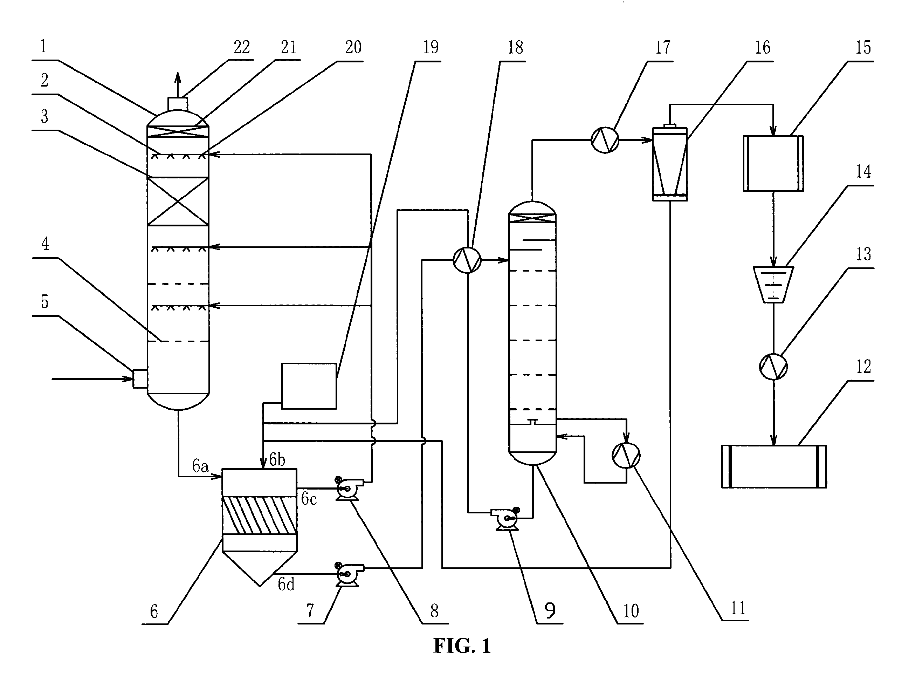

The sole figure is a connection structure diagram of an apparatus for capturing carbon dioxide from flue gas by using active sodium carbonate.

### DETAILED DESCRIPTION OF THE EMBODIMENTS

For further illustrating the invention, experiments detailing an apparatus and a method for capturing carbon dioxide from flue gas by using active sodium carbonate are described below combined with the drawing.

As shown in the figure, an apparatus for capturing carbon dioxide from flue gas by using active sodium carbonate comprises: an absorption tower **1,** a regeneration tower **10,** a cooler **17,** a gas-liquid separator **16,** a desiccator **15,** a compressor **14,** and a condenser **13.** Three absorbent spray layers **20** and one demister device **21** are arranged one after another from bottom to top between a lower flue gas inlet 5 and a top flue gas outlet **22** of the absorption tower **1.** A filler layer **3** is arranged beneath a highest absorbent spray layer **20.** A uniform flow sieve plate **4** is arranged beneath each of the other two absorbent spray layers **20.** A ratio between an aperture area and a plate area of the uniform flow sieve plate **4** is 38%. Such a combination of spraying structure assures a spraying coverage of the absorbent on a cross section of the absorption tower is 350% above. The demister device **21** comprises: an upper demisting filer screen, a lower demisting filer screen, and a cleaning spray component arranged between the two demisting filer screens for removing absorbent droplets in the flue gas.

A bottom slurry outlet of the absorption tower **1** communicates with an upper slurry inlet **6a** of a slanting board sedimentation pool **6,** and the sodium bicarbonate slurry is capable of flowing into the slanting board sedimentation pool **6** under the gravity thereof. An upper absorbent inlet **6b** of the slanting board sedimentation pool **6** communicates with an absorbent container **19** for replenishing sodium carbonate, amino alcohol activator, and a process water. Sodium carbonate is a predominate ingredient in a supernatant of the slanting board sedimentation pool **6,** and a sodium bicarbonate slurry is the predominate ingredient in an underflow. A supernatant outlet **6c** of the slanting board sedimentation pool **6** is connected to the three absorbent spray layers **20** of the absorption tower **1** via an absorbent circulating pump **8.** An underflow outlet **6d** of the slanting board sedimentation pool **6** is connected to an upper feed inlet of the regeneration tower **10** via a sodium bicarbonate pump **7** and a heat exchanger **18.** A lower feed outlet of the regeneration tower **10** is connected to the upper absorbent inlet **6b** of the slanting board sedimentation pool **6** via a sodium carbonate pump **9** and a heat exchanger **18.** A supporting boiling unit **11** of the regeneration tower **10** is arranged outside a bottom of the regeneration tower **10.**

An upper decomposed gas outlet of the regeneration tower **10** is connected to an inlet of the gas-liquid separator **16** via the cooler **17.** A liquid outlet of the gas-liquid separator **16** is connected to the upper absorbent inlet **6b** of the slanting board sedimentation pool **6.** A gas outlet of the gas-liquid separator **16** is in series connected with the desiccator **15,** the compressor **14,** and the condenser **13.** An outlet of the condenser **13** is connected to a storage tank of liquid carbon dioxide **12.** Each of the above devices are commonly used devices in the chemical industry, thus, structures thereof are not described herein.

In operation test of the above apparatus, parameter of mix proportion of the CO₂ absorbent is selected from the following in accordance with different content of CO₂ in the flue gas:

1) if a concentration of an aqueous solution of sodium carbonate is 10 wt. %, a weight ratio between monoethanolamine (MEA) or diethanolamine (DEA) and sodium carbonate is 1.5-6%;

2) if a concentration of an aqueous solution of sodium carbonate is 15 wt. %, a weight ratio between monoethanolamine (MEA) or diethanolamine (DEA) and sodium carbonate is 1-5%;

3) if a concentration of an aqueous solution of sodium carbonate is 20-25 wt. %, a weight ratio between monoethanolamine (MEA) or diethanolamine (DEA) and sodium carbonate is 0.8-4%; and

4) if a concentration of an aqueous solution of sodium carbonate is 30 wt. %, a weight ratio between monoethanolamine (MEA) or diethanolamine (DEA) and sodium carbonate is 0.5-3%.

Specific process flow of the invention is as follows: flue gas discharged from a coal-fired power plant is input into the absorption tower **1** via the lower flue gas inlet **5** after common dust removal and desulfurization treatment. The flue gas passes through the uniform flow sieve plate **4** and the filler layer **3** and flows upwards. Meanwhile, the aqueous solution of sodium carbonate added with the amino alcohol activator is sprayed downwards via the absorbent spray layers **20.** A circulating liquid gas ratio between a whole solution of the CO₂ absorbent and the flue gas is controlled within 5-25 L/m³, particularly within 12-22 L/m³. A temperature of a reaction between CO₂ in the flue gas and the CO₂ absorbent is controlled at 40-55°C; a pressure of the reaction is controlled at 3-300 kPa, particularly at 5-200 kPa. Thus, the upwardly flowing flue gas fully contacts with the downwardly sprayed CO₂ absorbent at the filler layer **3** and the uniform flow sieve plates **4** for allowing CO₂ in the flue gas reacting with and being absorbed by the amino alcohol activator and the aqueous solution of sodium carbonate.

The flue gas after being removed from a large amount of CO₂ continues flowing upward, passes through the demister device **21** for further removing absorbent droplets from the flue gas, and finally a cleaning flue gas is discharged directly into the atmosphere. The sodium bicarbonate slurry produced by absorbing CO₂ falls down to a bottom of the absorption tower **1,** and is introduced into the slanting board sedimentation pool **6** for stratifying after passing through the bottom slurry outlet of the absorption tower **1.** Sodium carbonate is the predominate ingredient in the supernatant of the slanting board sedimentation pool **6,** and the sodium bicarbonate slurry is the predominate ingredient in the underflow.

The sodium bicarbonate slurry is transported to an endothermic tube of the heat exchanger **18** via the sodium bicarbonate pump **7** and input into the regeneration tower **10** from the upper feed inlet after heat absorption. The sodium bicarbonate slurry is prayed into each sieve plate of the regeneration tower, heated and decomposed by an upward flowing water vapor; CO₂ is released. Incompletely decomposed sodium bicarbonate slurry falls down to the bottom of the regeneration tower **10,** and is heated by the supporting boiling unit **11** of the regeneration tower **10** to a temperature of 80-130°C and further decomposed for releasing high concentrated CO₂ gas while an aqueous solution of sodium carbonate is acquired.

The aqueous solution of sodium carbonate in the regeneration tower **10** is raised up by the sodium carbonate pump **9** and input into an exothermic tube of the heat exchanger **18** for heat release. Thereafter, the aqueous solution of sodium carbonate is input into the slanting board sedimentation pool **6** from the upper absorbent inlet **6b,** and further transported into the absorbent spray layers **2** of the absorption tower **1** via the absorbent circulating pump **8** for recycling.

The high concentrated CO₂ gas released from the regeneration tower along with a large amount of water vapor flow out of the regeneration tower **10** through the upper decomposed gas outlet of the regeneration tower **10,** and into the cooler **17** in which CO₂ gas is cooled to a temperature of 25-35°C and most of the water vapor is condensed.

A high concentrated CO₂ gas is acquired after being treated by the cooler **17,** and transported into the gas liquid separator **16,** in which the condensed water is completely separated from CO₂ gas under a centrifugal force, and a highly purified CO₂ gas having a purity exceeding 99% is obtained. The separated condensed water is transported through the water outlet of the gas liquid separator **16** and the upper absorbent inlet **6b** of the slanting board sedimentation pool **6,** and finally into the slanting board sedimentation pool **6** for recycling. The separated highly purified CO₂ gas is transported to the desiccators **15** for drying treatment, and then into the compressor for compression. The compressed CO₂ gas is transported into the condenser **13** for being condensed into the liquid state and obtaining a high concentrated industrialized liquid CO₂ product, which is finally input into the storage tank of liquid carbon dioxide **12** for storing.

## Claims

1. A method for capturing carbon dioxide from flue gas by using active sodium carbonate, the method being a reprocessing of the flue gas of power plant boilers after common dust removal and desulfurization treatment; **characterized in that:**
the method comprises the following steps:
1) mixing an aqueous solution of sodium carbonate with an amino alcohol activator to yield a CO₂ absorbent; evenly spraying the CO₂ absorbent into the flue gas after the common dust removal and desulfurization treatment for fully contacting the flue gas flowing upwardly with the downwardly sprayed CO₂ absorbent and for allowing CO₂ in the flue gas to react with the amino alcohol activator and the aqueous solution of sodium carbonate: the amino alcohol activator first contacting with CO₂ to form a zwitterionic intermediate and being free again in a consequent hydration reaction of the zwitterionic intermediate, H⁺ produced from the hydration reaction being neutralized by alkali ion CO₃²⁻ in the aqueous solution of sodium carbonate, and HCO₃⁻produced from the hydration reaction contacting with metal ion Na⁺ in the aqueous solution of sodium carbonate and precipitating to produce a sodium bicarbonate slurry;
2) thermal decomposing the sodium bicarbonate slurry obtained in step 1) to produce a high concentrated CO₂ gas and an aqueous solution of sodium carbonate;
3) returning the aqueous solution of sodium carbonate obtained in step 2) to step 1) to form the CO₂ absorbent for recycling;
4) cooling the high concentrated CO₂ gas separated from step 2) for condensing hot water vapor therein;
5) carrying out gas-liquid separation on the high concentrated CO₂ gas after cooling treatment of step 4), removing condensed water to yield high purified CO₂ gas having a purity exceeding 99%; and
6) drying, compressing, and condensing the high purified CO₂ gas obtained from step 5) to transform the high purified CO₂ gas into a liquid state, whereby obtaining high concentrated liquid CO₂.

2. The method of claim 1, **characterized in that** in step 1),
a concentration of the aqueous solution of sodium carbonate is 10-30 wt. %;
the amino alcohol activator is monoethanolamine or diethanolamine;
a weight of monoethanolamine or diethanolamine being added is 0.5-6% of a weight of sodium carbonate being added; and
a circulating liquid-gas ratio between a whole solution of the CO₂ absorbent and the flue gas is 5-25 L/m³.

3. The method of claim 1 or 2, **characterized in that** a temperature of the reaction between CO₂ in the flue gas and the CO₂ absorbent in step 1) is controlled at 40-55°C; and a pressure of the reaction is controlled at 3-300 kPa.

4. The method of claim 1 or 2, **characterized in that** a temperature of the thermal decomposition of the sodium bicarbonate slurry in step 2) is controlled at 80-130°C.

5. The method of claim 1 or 2, **characterized in that** the high concentrated CO₂ gas is cooled to a temperature of 20-35°C.

6. An apparatus for capturing carbon dioxide from flue gas by using active sodium carbonate according to the method of claim 1, the apparatus comprising:
a) an absorption tower (1);
b) a regeneration tower (10);
c) a cooler (17);
d) a gas-liquid separator (16);
e) a desiccator (15);
f) a compressor (14); and
g) a condenser (13);
**characterized in that**
a plurality of absorbent spray layers (20) and at least one demister device (21) are arranged one after another from bottom to top between a lower flue gas inlet (5) and a top flue gas outlet (22) of the absorption tower (1);
a bottom slurry outlet of the absorption tower (1) communicates with an upper slurry inlet (6a) of a slanting board sedimentation pool (6); an upper absorbent inlet (6b) of the slanting board sedimentation pool (6) communicates with an absorbent container (19);
a supernatant outlet (6c) of the slanting board sedimentation pool (6) is connected to the absorbent spray layers (20) of the absorption tower (1) via an absorbent circulating pump (8);
an underflow outlet (6d) of the slanting board sedimentation pool (6) is connected to an upper feed inlet of the regeneration tower (10) via a sodium bicarbonate pump (7); a lower feed outlet of the regeneration tower (10) is connected to the upper absorbent inlet (6b) of the slanting board sedimentation pool (6) via a sodium carbonate pump (9); and
an upper decomposed gas outlet of the regeneration tower (10) is connected to an inlet of the gas-liquid separator (16) via the cooler (17); a gas outlet of the gas-liquid separator (16) is in series connected with the desiccator (15), the compressor (14), and the condenser (13).

7. The apparatus of claim 6, **characterized in that**
the underflow outlet (6d) of the slanting board sedimentation pool (6) is connected to the upper feed inlet of the regeneration tower (10) via the sodium bicarbonate pump (7) and a heat exchanger (18); and
the lower feed outlet of the regeneration tower (10) is connected to the upper absorbent inlet (6b) of the slanting board sedimentation pool (6) via the sodium carbonate pump (9) and the heat exchanger (18).

8. The apparatus of claim 6 or 7, **characterized in that** a liquid outlet of the gas-liquid separator (16) is connected to the upper absorbent inlet (6b) of the slanting board sedimentation pool (6).

9. The apparatus of claim 6 or 7, **characterized in that**
three absorbent spray layers (20) are employed;
a filler layer (3) is arranged beneath a highest absorbent spray layer (20); and
a uniform flow sieve plate (4) is arranged beneath each of the other two absorbent spray layers (20).

10. The apparatus of claim 9, **characterized in that** a ratio between an aperture area and a plate area of the uniform flow sieve plate (4) is 30-40%.
